# EUROPEAN PATENT APPLICATION

(11) **EP 2 919 128 A1**
(43) Date of publication of application: **16.09.2015**
(21) Application number: 13853377.3
(22) Date of filing: 08.11.2013
(51) Int. Cl.: G06F 17/30, G06F 21/60

(54) **INFORMATION PROCESSING SYSTEM THAT ANALYZES PERSONAL INFORMATION, AND METHOD FOR ANALYZING PERSONAL INFORMATION**

(30) Priority: 12.11.2012 JP 2012248526
(71) Applicant: NEC Corporation, Tokyo 108-8001 (JP)
(72) Inventor: MORI, Takuya, Tokyo 108-8001 (JP)
(74) Representative: Vossius & Partner Patentanwälte Rechtsanwälte mbB
(86) International application number: PCT/JP2013/006594
(87) International publication number: WO 2014/073214

(57) **Abstract**

The present invention provides an information processing system that can secure anonymity of personal information sent from a terminal to a server from the terminal side. The information processing system is provided with: a means for storing information recommendation rules indicating the level of recommendation priority of each unit of recommendation information presented to a user; a means for generating feedback information for updating the personal information of the user with respect to the information recommendation rules, generating anonymized feedback information by anonymizing the feedback information, and outputting the result; and a means for updating the information recommendation rules using the anonymized feedback information.

## Description

### Technical Field

The present invention relates to an information processing system, a method for analyzing personal information and a program thereof which analyze personal information with taking protection of privacy into consideration.

### Background Art

Various related arts for analyzing and using user's personal information are known.

For example, in an information providing service, by analyzing personal information (user's behavior information or the like) which is collected and stored on a terminal side, and distributing contents which are personalized for a user, it is possible to provide a service which has superior convenience for the user.

PTL 1 discloses an example of an information analyzing art. According to a trend evaluating art which is described in PTL 1, a degree of change in co-occurrence of a key word and a related word thereof, and a degree of change in a topic related to the key word are calculated.

Then, according to the trend evaluating art, a trend score is calculated in consideration of the relative degree of co-occurrence and the relative degree of similarity of related word which are calculated as mentioned above.

Moreover, NPL 1 discloses an art of predicting an evaluation value which a certain user will determine when evaluating a certain item. According to Slope One Scheme which is described in NPL 1, in the case that an evaluation value which a certain user (called user 1) determines when evaluating a certain item (called idem 1) is not clear, the evaluation value is estimated as follows.

According to the Slope One Scheme, a difference 'd' between an evaluation value which another user (called user 2) determines when evaluating the item 1, and an evaluation value which the user 2 determines when evaluating another item (called item 2) is calculated. Here, in the case that the user 2 includes a plurality of persons, a user mean value 'dmu' of the difference 'd', which is corresponding to each of the user 2, is calculated.

Next, according to the Slope One Scheme, on the basis of the difference 'd' (or, user mean value 'dmu'), an evaluation value which the user 1 will determine when evaluating the item 1 is predicted. Here, in the case that the difference 'd' which is corresponding to each of the plural items 2 is acquired, according to the Slope One Scheme, on the basis of an item mean value 'dmi' of the difference 'd', an evaluation value of the user 1 to the item 1 is predicted. Moreover, in the case that the user mean value 'dmu' which is corresponding to each of the plural items 2 is acquired, according to the Slope One Scheme, an evaluation value of the user 1 to the item 1 is predicted on the basis of the item mean value 'dmi' of the user mean value 'dmu'. Here, 'dmui' is a weighted mean which is calculated by considering number of persons included in the user 2 who are corresponding to each of the items 2. In NPL 1, the Slope One Scheme using the weighted mean is called Weighted Slope One Scheme. Furthermore, NPL 1 discloses Bi-Polar Slope One Scheme whose target is

an evaluation including distinction between likes and dislikes.

Meanwhile, in the case of analyzing the user's personal information, it is mandatory to take the privacy into consideration.

For example, PTL 2 discloses an example of a data integration system in which data is concealed and the concealed data is transferred and collected.

The data integration system, which is described in PTL 2, is a distribution type data integration system which carries out a collective calculation to a set of elements stored in each of three or more nodes. Each of the nodes includes a means which conceals the set of elements stored therein by scrambling a character stream or number of elements, and consequently generates and outputs concealed data.

Moreover, each of the nodes includes a means for outputting a set of summation of the concealed data which is generated therein, and the concealed data which is sent from another node. Furthermore, a collection and summation node out of the nodes includes a means which decodes the concealed data (a set of summation of concealed data) sent by another node. Moreover, the collection and summation node includes a means which removes influence, which is caused by scrambling the character data or scrambling the number of elements, from a set of elements which is acquired by decoding the concealed data. Then, the collection and summation node includes a means for carrying out a collective calculation to the set of elements from which the influence caused by scrambling the character data or scrambling the number of elements is removed. PTL 2 describes that, by having the above-mentioned configuration, the data integration system can carry out the data integration among the distribution nodes in a state that the other nodes do not estimate the set of elements.

### Citation List

### Patent Literature

PTL 1: International Publication No. 2007/043322
PTL 2: Japanese Patent Application Laid-Open Publication No. 2010-166228

### Non Patent Literature

NPL 1:D. Lemire and A. Maclachlan, "Slope One Predictors for Online Rating-Based Collaborative Filtering", In SIAM Data Mining (SDM'05), Newport Beach, California, April 21-23, 2005.

### Summary of Invention

### Technical Problem

However, the art described in PTL 2 has a problem that, for example, in the case that a user's terminal sends personal information to a server, it is difficult to secure anonymity of the personal information from the terminal side.

Specifically, in the case that the user's terminal sends the personal information, which includes user's behavior information or the like, to the server, the server can carry out various analyses on the personal information even if a process of hiding the personal information behind a pseudonym, or a process of grouping the personal information is carried out. As a result, there is a possibility that the user's personal information, and information, which specifies the user, may be associated each other. Therefore, there is a danger that privacy of the personal information may not be protected sufficiently.

The reason is that, according to the data integration system which is described in PTL 2, each node carries out the collective calculation to both of the concealed data which is generated by concealing own set of elements, and the concealed data, which is provided by another node, in a concealed state, and transfers the collective calculation result, and consequently it is impossible to estimate a history of each element.

That is, according to the art of the data integration system, in order to integrate the concealed personal information (set of elements in PTL 2), it is necessary to communicate among three or more nodes, each of which has the personal information, in a looped sequence.

An object of the present invention is to provide an information processing system, a method for analyzing personal information and a program thereof which solve the above-mentioned problem.

### Advantageous Effects of Invention

A personal information analyzing system according to one aspect of the present invention includes: an information recommendation rule storing means for storing an information recommendation rule indicating a level of recommendation priority of each unit of recommendation information presented to a user; an anonymized feedback information generating means for generating feedback information, which is used for updating personal information of said user with respect to said information recommendation rule, by use of personal information of said user and said information recommendation rule, generating anonymized feedback information by anonymizing said feedback information, and outputting said anonymized feedback information; and an information recommendation rule updating means for updating said information recommendation rule using said anonymized feedback information.

A personal information analyzing method according to one aspect of the present invention, which a computer: generates feedback information, which is used for updating personal information of a user with respect to an information recommendation rule, by use of said information recommendation rule indicating a level of recommendation priority of each unit of recommendation information presented to said user, and personal information of said user, and generates anonymized feedback information by anonymizing said feedback information, and outputs said anonymized feedback information; and updates said information recommendation rule using said anonymized feedback information.

A computer-readable non- transitory recording medium according to one aspect of the present invention storing a program for making a computer execute a process to: generate feedback information, which is used for updating personal information of a user with respect to an information recommendation rule, by use of said information recommendation rule indicating a level of recommendation priority of each unit of recommendation information presented to said user, and personal information of said user, and generate anonymized feedback information by anonymizing said feedback information, and output said anonymized feedback information; and update said information recommendation rule using said anonymized feedback information.

The present invention has an advantageous effect that, in the case that a terminal sends personal information to a server, it is possible to secure anonymity of the personal information from the terminal side.

### Brief Description of Drawings

[Fig. 1] Fig. 1 is a block diagram showing a configuration of a personal information analyzing system according to a first exemplary embodiment.
[Fig. 2] Fig. 2 is a diagram showing an example of behavior information.
[Fig. 3] Fig. 3 is a diagram showing an example of an information recommendation rule.
[Fig. 4] Fig. is a diagram showing an example of an analysis-reflected information recommendation rule.
[Fig. 5] Fig. is a diagram showing an example of feedback information.
[Fig. 6] Fig. 6 is a diagram showing an example of anonymized feedback information.
[Fig. 7] Fig. 7 is a diagram showing an example of anonymized feedback information.
[Fig. 8] Fig. 8 is a diagram showing an example of an information recommendation rule.
[Fig. 9] Fig. 9 is a block diagram showing a hardware configuration of a computer which realizes the personal information analyzing system according to the first exemplary embodiment.
[Fig. 10] Fig. 10 is a flowchart showing an operation of the personal information analyzing system in the first exemplary embodiment.
[Fig. 11] Fig. 11 is a flowchart showing an operation of the personal information analyzing system in the first exemplary embodiment.
[Fig. 12] Fig. 12 is a block diagram showing a configuration of an information recommendation system according to a second exemplary embodiment.
[Fig. 13] Fig. 13 is a flowchart showing an operation of the information recommendation system according to the second exemplary embodiment.
[Fig. 14] Fig. 14 is a flowchart showing an operation of the information recommendation system according to the second exemplary embodiment.
[Fig. 15] Fig. 15 is a block diagram showing an example of an information recommendation system in a third exemplary embodiment.
[Fig. 16] Fig. 16 is a block diagram showing a configuration of an information recommendation system according to a fourth exemplary embodiment.
[Fig. 17] Fig. 17 is a diagram showing an example of an evaluation value.
[Fig. 18] Fig. 18 is a diagram showing an example of an information recommendation rule.
[Fig. 19] Fig. 19 is a diagram showing an example of feedback information.
[Fig. 20] Fig. 20 is a diagram showing an example of anonymized feedback information.
[Fig. 21] Fig. 21 is a diagram showing an example of anonymized feedback information.
[Fig. 22] Fig. 22 is a diagram showing an example of an information recommendation rule.
[Fig. 23] Fig. 23 is a flowchart showing an operation of the information recommendation system in the fourth exemplary embodiment.
[Fig. 24] Fig. 24 is a block diagram showing a configuration of an information recommendation system according to a fifth exemplary embodiment.
[Fig. 25] Fig. 25 is a block diagram showing an example of an information recommendation system in a sixth exemplary embodiment.

### Description of Embodiments

An exemplary embodiment which carries out the present invention will be explained in detail with reference to a drawing. Here, in each drawing and each exemplary embodiment described in DESCRIPTION, the same component has the same code, and an explanation on the component will be omitted appropriately.

### <<<First exemplary embodiment>>>

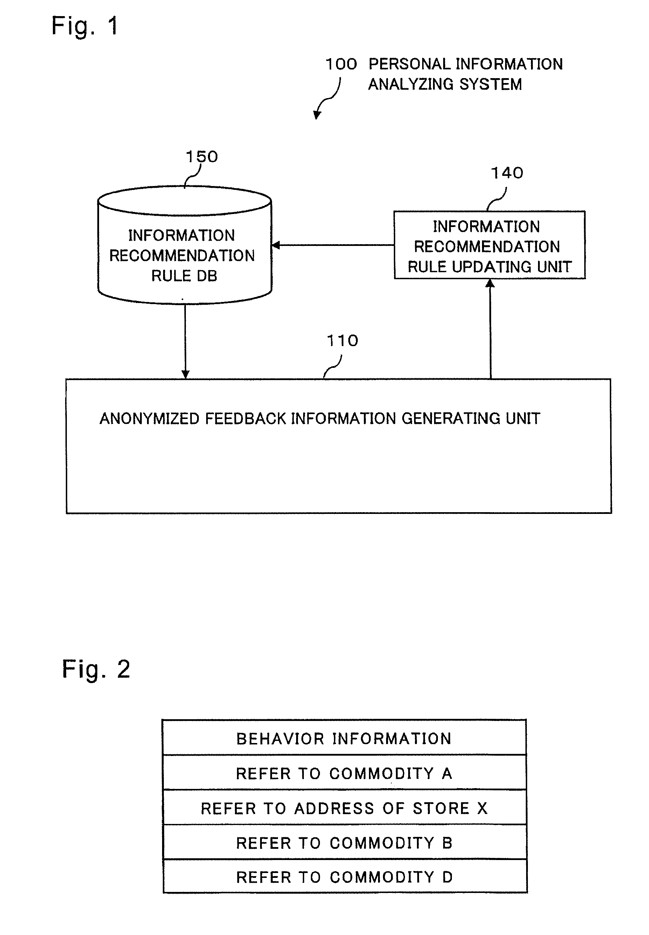

Fig. 1 is a block diagram showing a configuration of a personal information analyzing system 100 according to a first exemplary embodiment of the present invention.

With reference to Fig. 1, the personal information analyzing system 100 according to the present exemplary embodiment includes a plurality of anonymized feedback information generating units 110 (only one unit is shown in the drawing as a typical example), an information recommendation rule updating unit 140 and an information recommendation rule DB (Data Base) 150. The information recommendation rule DB is also called an information recommendation rule storing means.

Next, each component of the personal information analyzing system 100 in the first exemplary embodiment will be explained. Here, the component shown in Fig. 1 may be a component which is divided in an unit of hardware, or may be a component which is divided in an unit of function of a computer. In this case, the component shown in Fig. 1 is the component which is divided in the unit of function of the computer.

### === Anonymized feedback information generating unit 110 ====

The anonymized feedback information generating unit 110 generates feedback information by use of personal information (for example, user's behavior information), and an information recommendation rule which the information recommendation rule DB 150 stores.

Here, the feedback information is information for updating the personal information with respect to the information recommendation rule.

Moreover, the information recommendation rule is a rule for determining recommendation information which is presented to a user. Here, the recommendation information is information for recommending a commodity. For example, the information recommendation rule is information which indicates a relation between elements (for example, commodities) which are recommended by the recommendation information. For example, the information, which indicates the relation, is a co-occurrence rate or number of co-occurrences of commodity's names which is based on the co-occurrence of the commodity's names referred to by each of users. That is, the information recommendation rule indicates a level of suitability (also called recommendation priority) on presenting each the recommendation information or a level of suitability on not presenting each the recommendation information.

For example, the anonymized feedback information generating unit 110 analyzes the personal information and makes the analysis result reflected in the information recommendation rule to generate an analysis-reflected information recommendation rule. Next, the anonymized feedback information generating unit 110 extracts a difference between the generated analysis-reflected information recommendation rule and the information recommendation rule to generate the feedback information.

Moreover, the anonymized feedback information generating unit 110 generates anonymized feedback information by anonymizing the generated feedback information. Next, the anonymized feedback information generating unit 110 outputs the anonymized feedback information. For example, the anonymized feedback information generating unit 110 generates the anonymized feedback information by applying randomized number (add an error) to the feedback information. Moreover, the anonymized feedback information generating unit 110 may generate the anonymized feedback information by exchanging individual values which are included in the feedback information.

### === Behavior information (personal information) ===

Fig. 2 is a diagram showing an example of behavior information which is a kind of the personal information. As shown in Fig. 2, the behavior information is reference information which indicates that, for example, a user refers to data on a commodity. For example, the behavior information is information on a user's position which is based on a position where a user's terminal exists, purchase information on a commodity which the user purchases, or the like. While the above is shown as the example of the behavior information, the behavior information may be any available information on the user's behavior.

### === Recommendation Information rule ===

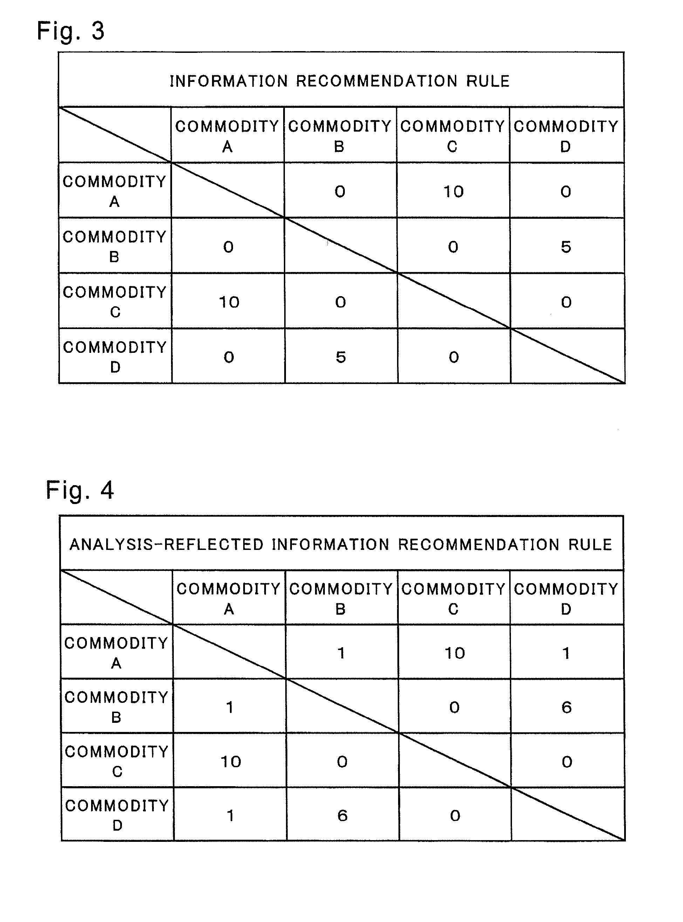

Fig. 3 is a diagram showing an example of the recommendation information rule. As shown in Fig. 3, the information recommendation information expresses a relation between one commodity and another commodity in terms of co-occurrence number. In Fig. 3, for example, a relation between 'commodity A' and 'commodity C' is '10'. This means that a case that a user who refers to both of 'commodity A' and 'commodity C' (that is, 'commodity A' and 'commodity C' co-occur) exists occurred 10 times. Here, the relation may be number of cases, in each of which 'commodity A' and 'commodity C' co-occur, in place of number of the cases in each of which the above-mentioned user exists. Moreover, the relation may be a co-occurrence rate whose population is number of users who provide the behavior information, and a value of the population.

In this case, the recommendation information rule indicates that, as a value of the relation becomes large, a level of suitability on presenting recommendation information on a commodity which is corresponding to the value becomes high.

### ===Analysis-reflected information recommendation rule ===

Fig. 4 is a diagram showing an example of the analysis-reflected information recommendation rule which is made by reflecting the behavior information, which is shown in Fig. 2, in the information recommendation rule shown in Fig. 3.

The analysis-reflected information recommendation rule shown in Fig. 4 is made by reflecting the behavior information of 'refer to commodity A', 'refer to commodity B' and 'refer to commodity D', which is shown in Fig. 2, in the information recommendation rule shown in Fig. 3. That is, by comparing the analysis-reflected information recommendation rule shown in Fig. 4 with the information recommendation rule shown in Fig. 3, it is found that number of co-occurrences of 'commodity A' and 'commodity B', number of co-occurrences of 'commodity A' and 'commodity D', and number of co-occurrences of 'commodity B' and 'commodity D' increase by '1'. Here, since the behavior information of 'refer to address of store X' which is shown in Fig. 2 has not any element corresponding to the information recommendation rule shown in Fig. 3, the analysis-reflected information recommendation rule shown in Fig. 4 does not include reflection of the behavior information.

### === Feedback information ===

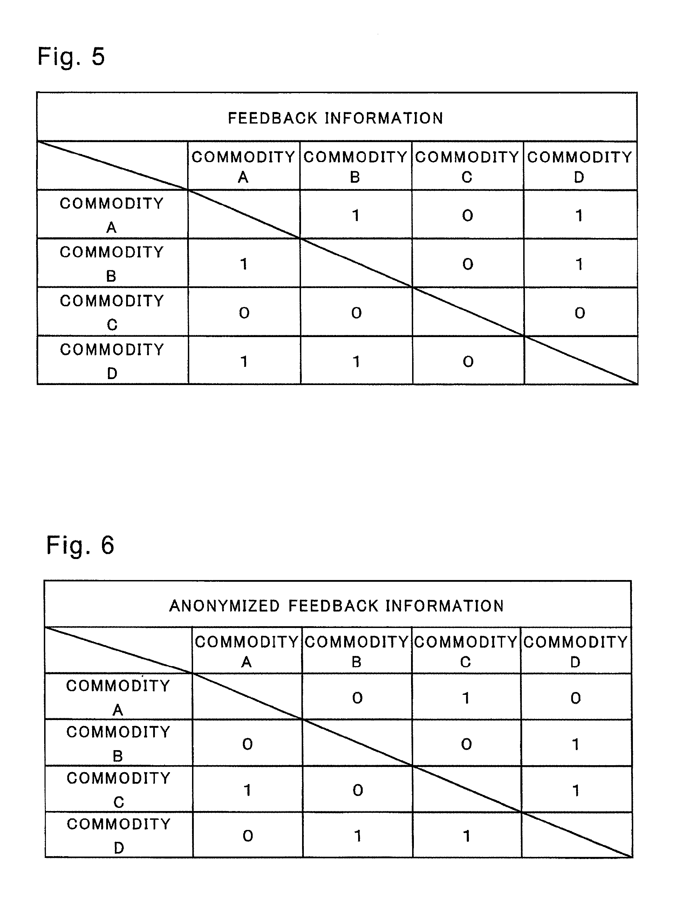

Fig. 5 is a diagram showing an example of the feedback information which is generated by extracting a difference between the analysis-reflected information recommendation rule shown in Fig. 4 and the information recommendation rule shown in Fig. 3

The feedback information shown in Fig. 5 is information which indicates the difference between the information recommendation rule shown in Fig. 3 and the analysis-reflected information recommendation rule shown in Fig. 4. That is, the feedback information shown in Fig. 5 is information for updating the information recommendation rule shown in Fig. 3 on the basis of the behavior information of 'refer to commodity A', 'refer to commodity B' and 'refer to commodity D' shown in Fig. 2.

### === Anonymized feedback information ===

Fig. 6 is a diagram showing an example of the anonymized feedback information which is generated by anonymizing the feedback information shown in Fig. 5.

The anonymized feedback information shown in Fig. 6 is information which is generated by applying random numbers, whose expectation number is 0, to values of the feedback information. According to the example of the anonymized feedback information shown in Fig.6, number of co-occurrences of 'commodity A' and 'commodity B' changes from '1' to '0', and number of co-occurrences of 'commodity A' and 'commodity C' changes from '0' to '1', Moreover, number of co-occurrences of 'commodity A' and 'commodity D' changes from 1' to '0', and number of co-occurrences of 'commodity C' and 'commodity D' changes from '0' to '1',

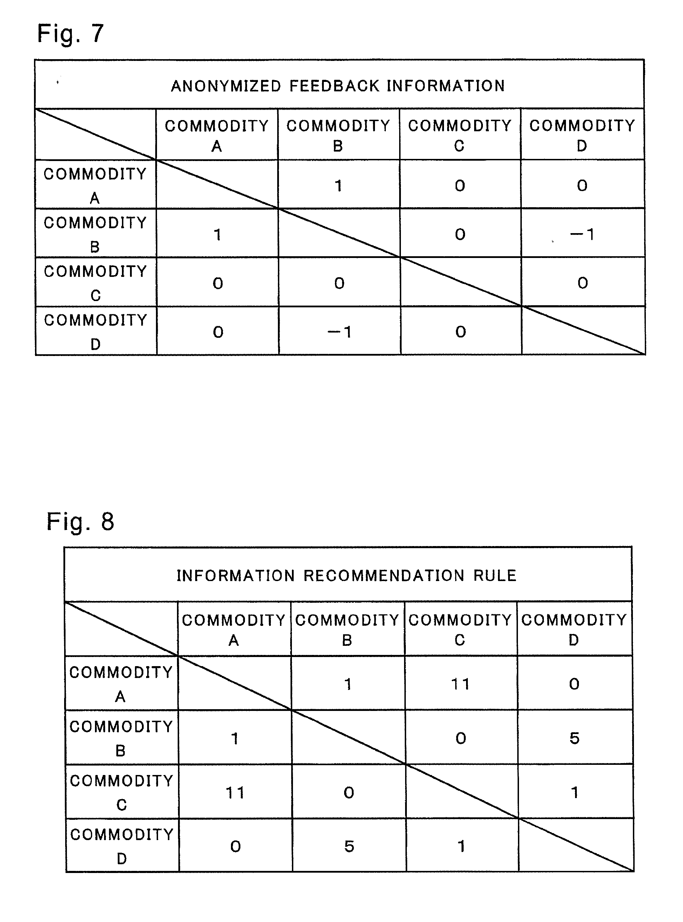

Fig. 7 is a diagram showing an example of anonymized feedback information of a certain user who is different from a user who is corresponding to the anonymized feedback information shown in Fig. 6.

### === Information recommendation rule updating unit 140 ===

The information recommendation rule updating unit 140 updates the information recommendation rule, which the information recommendation rule DB 150 stores, by use of the anonymized feedback information. For example, the information recommendation rule updating unit 140 updates the information recommendation rule by combining the information recommendation rule with the anonymized feedback information.

Fig. 8 is a diagram showing an information recommendation rule which is updated by combining the information recommendation rule with the anonymized feedback information shown in Fig. 6 and Fig. 7. As shown in Fig. 8, the information recommendation rule shown in Fig. 3 is combined with the anonymized feedback information shown in Fig. 6 and Fig. 7.

For example, as shown in Fig. 8, number of co-occurrences of 'commodity A' and 'commodity B' is updated to be '1 (= 0 + 0 +1)'. Moreover, as shown in Fig. 8, number of co-occurrences of 'commodity A' and 'commodity C' is updated to be '11 (= 10 + 0 +1)'. Moreover, as shown in Fig. 8, number of co-occurrences of 'commodity A' and 'commodity C' is updated to be '5 (= 5 + 1 + (-1))'. Moreover, as shown in Fig. 8, number of co-occurrences of 'commodity C' and 'commodity D' is updated to be '1 (= 0 + 1 +0)'.

### === Information recommendation rule DB 150 ===

The information recommendation rule DB 150 stores the recommendation information rule.

The above is explanation on each component which is divided in the function unit of the personal information analyzing system 100.

Next, a component of a hardware unit of the anonymization device 100 will be described.

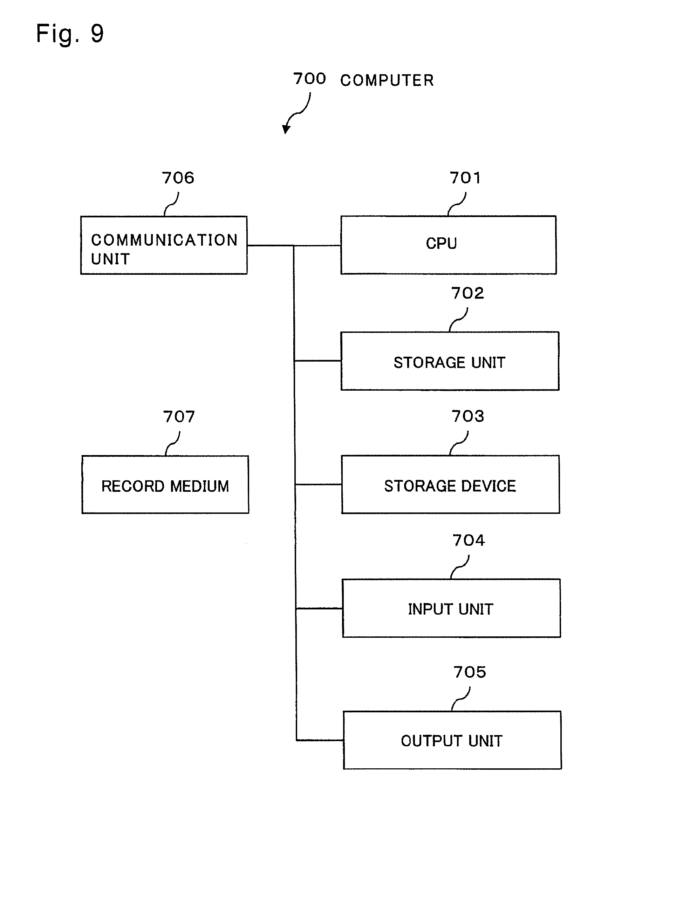

Fig. 9 is a diagram illustrating a hardware configuration of a computer 700 for implementing the personal information analyzing system 100 according to this exemplary embodiment.

As illustrated in Fig. 9, the computer 700 includes a CPU (Central Processing Unit) 701, a storage unit 702, a storage device 703, an input unit 704, an output unit 705, and a communication unit 706. In addition, the computer 700 includes a recording medium (or a storage medium) 707 provided externally. The recording medium 707 may be a nonvolatile recording medium storing information non-temporarily.

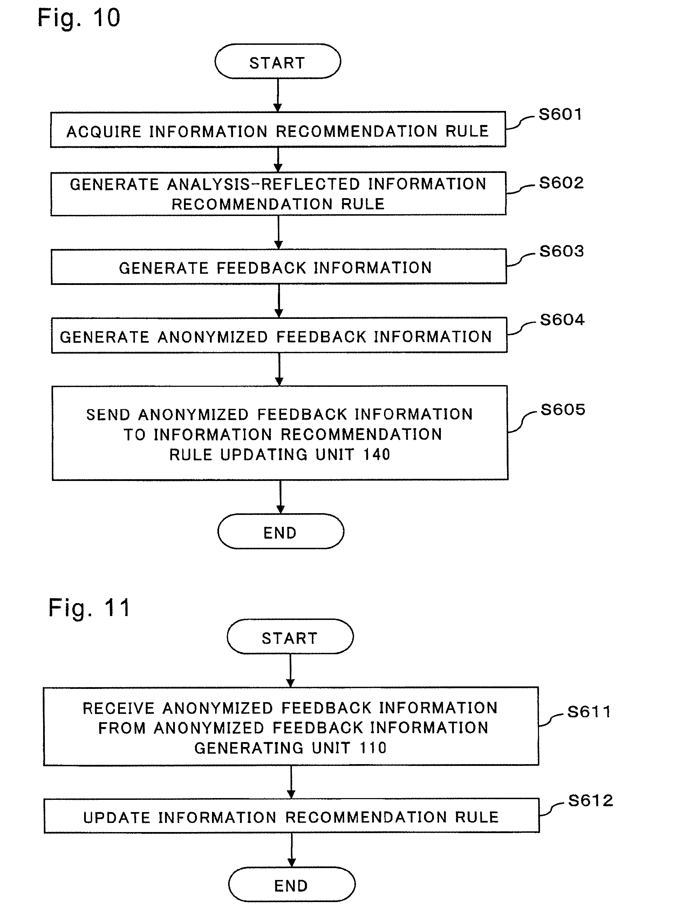

The CPU 701 controls the entire operation of the computer 700 by causing the operating system (not illustrated) to operate. In addition, the CPU 701 loads a program or data from the recording medium 707 supplied to the storage device 703, for example, and writes the loaded program or data in the storage unit 702. Here, the program is, for example, a program for causing the computer 700 to perform the operations in the flowcharts presented in Fig. 10 and 11 to be described later.

Then, the CPU 701 carries out various processes as the anonymized feedback information generating unit 110 and the information recommendation rule updating unit 140 presented in Fig. 1, according to the loaded program or on the basis of the loaded data.

Here, the function of the anonymized feedback information generating unit 110, and the function of the information recommendation rule updating unit 140 shown in Fig. 1 may be carried out respectively by computers 700 which are different each other.

Alternatively, the CPU 701 may be configured to download a program or data from an external computer (not illustrated) connected to a communication network (not illustrated), to the storage unit 702.

The storage unit 702 stores programs and data. The storage unit 702 may store data, for example, the data shown in Fig. 3, 4, 5 and 6. The storage unit 702 may include the information recommendation rule DB 150.

For example, the storage device 703 is an optical disc, a flexible disc, a magnetic optical disc, an external hard disk, or a semiconductor memory, and includes a non-volatile storage medium 707. The storage device 703 records a program so that it is computer-readable. The storage device 703 may record data. The storage device 703 may store data, for example, the data shown in Fig. 3, 4, 5 and 6. The storage device 703 may include the information recommendation rule DB 150.

The input unit 704 is realized by a mouse, a keyboard, or a built-in key button, for example, and is used for an input operation. The input unit 704 is not limited to a mouse, a keyboard, or a built-in key button, it may be a touch panel, an accelerometer, a gyro sensor, or a camera, for example.

The output unit 705 is realized by a display, for example, and is used in order to check outputs.

The communication unit 706 realizes interface between the anonymized feedback information generating unit 110, he function of the information recommendation rule updating unit 140 and the information recommendation rule DB 150. The communication unit 706 may be included in the anonymized feedback information generating unit 110, he function of the information recommendation rule updating unit 140 and the information recommendation rule DB 150 as a part of each of them.

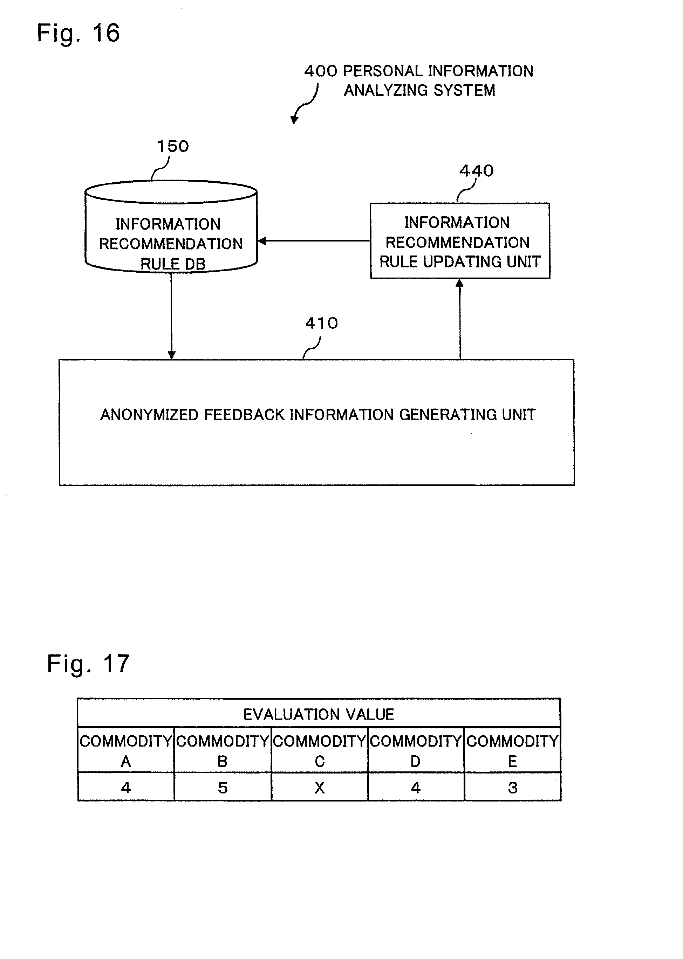

As described above, the blocks serving as functional units of the personal information analyzing system 100 illustrated in Fig. 1 may be implemented by the computer 700 having the hardware configuration illustrated in Fig. 16. However, means for implementing the units included in the computer 700 are not limited to those described above. In other words, the computer 700 may be implemented by a single physically-integrated device, or may be implemented by two or more physically-separated devices that are connected to each other with wire or by wireless.

Instead, the recording medium 707 with the codes of the above-described programs recorded therein may be provided to the computer 700, and the CPU 701 may be configured to load and then execute the codes of the programs stored in the recording medium 707. Alternatively, the CPU 701 may be configured to store the codes of each program stored in the recording medium 707, in the storage unit 702, the storage device 703, or both. In other words, this exemplary embodiment includes an exemplary embodiment of the recording medium 707 for storing programs (software) to be executed by the computer 700 (CPU 701) in a transitory or non-transitory manner.

The above is the description of hardware about each component of the computer 700 which realizes the personal information analyzing system 100

Next, an operation of the present exemplary embodiment will be explained in detail with reference to Fig. 1 to Fig. 11.

Fig. 10 is a flowchart showing an operation of the anonymized feedback information generating unit 110 of the present exemplary embodiment. Here, a process based on the flowchart may be carried out through program control by the above-mentioned CPU. Moreover, each step name is described by use of a symbol such as S601.

The anonymized feedback information generating unit 110 acquires the information recommendation rule from the information recommendation rule DB 150 (S601).

Next, the anonymized feedback information generating unit 110 analyzes the behavior information (personal information), and generates the analysis-reflected information recommendation rule by reflecting the analysis result in the acquired information recommendation rule (S602).

Next, the anonymized feedback information generating unit 110 generates the feedback information by extracting the difference between the generated analysis-reflected information recommendation rule and the acquired information recommendation rule which has not been updated yet (S602).

Next, the anonymized feedback information generating unit 110 generates the anonymized feedback information by anonymizing the generated feedback information (S604).

Next, the anonymized feedback information generating unit 110 sends the generated anonymized feedback information to the information recommendation rule updating unit 140 (S605). For example, in the case that the information recommendation rule updating unit 140 requests the anonymized feedback information generating unit 110 to send the anonymized feedback information, in response to the request, the anonymized feedback information generating unit 110 sends the anonymized feedback information to the information recommendation rule updating unit 140. Here, the anonymized feedback information generating unit 110 may send the anonymized feedback information at a predetermined time or at a predetermined time interval.

Fig. 11 is a flowchart showing an operation of the information recommendation rule updating unit 140. Here, a process based on the flowchart may be carried out through program control by the above-mentioned CPU.

The information recommendation rule updating unit 140 receives the anonymized feedback information from the anonymized feedback information generating unit 110 (S611). For example, the information recommendation rule updating unit 140 requests the anonymized feedback information generating unit 110 to send the anonymized feedback information. Then, the information recommendation rule updating unit 140 receives the anonymized feedback information which is sent as response to the request. Here, the information recommendation rule updating unit 140 may receive the anonymized feedback information passively from the anonymized feedback information generating unit 110.

Next, the information recommendation rule updating unit 140 updates the information recommendation rule, which the information recommendation rule DB 150 stores, by use of the received anonymized feedback information (S612).

The above-mentioned exemplary embodiment has an effect in a point that, in the case that a user's terminal sends personal information, it is possible to secure anonymity of the personal information from the terminal side.

The reason is that the anonymized feedback information generating unit 110 generates the anonymized feedback information, and the information recommendation rule updating unit 140 updates the information recommendation rule on the basis of the anonymized feedback information.

### <<<Second exemplary embodiment>>>

Next, a second exemplary embodiment of the present invention will be explained in detail with reference to a drawing. Hereinafter, explanation which overlaps with the above-mentioned explanation is omitted as far as explanation on the present exemplary embodiment does not become obscure.

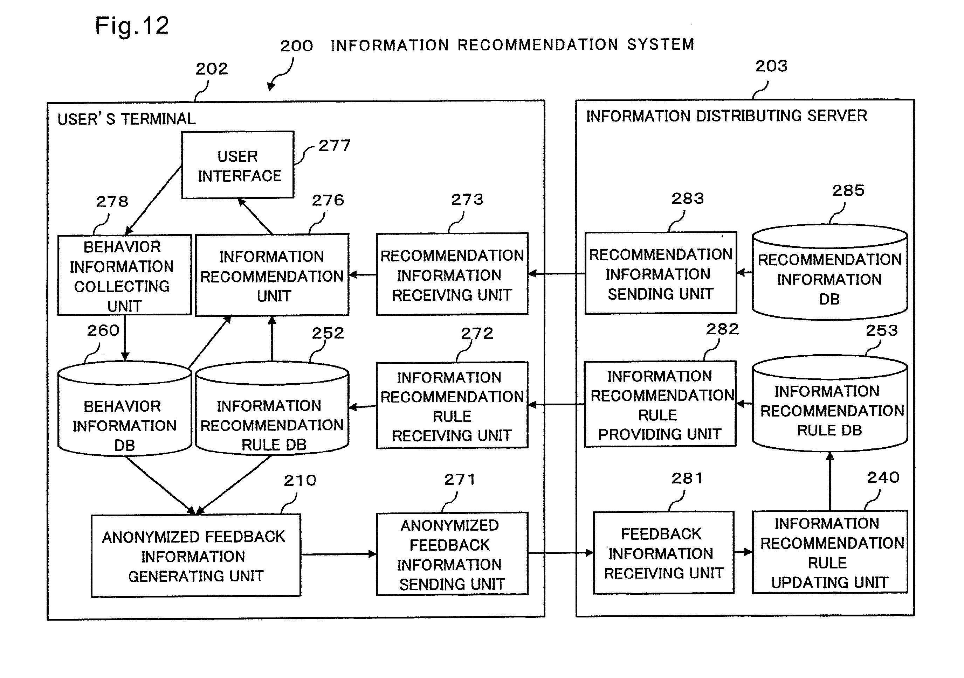

Fig. 12 is a block diagram showing a configuration of an information recommendation system 200 according to the second exemplary embodiment of the present invention.

With reference to Fig. 12, the information recommendation system 200 includes a plurality of user's terminals 202 (only one user's terminal is shown in the drawing as a typical terminal.), and an information distributing server 203. The user's terminal 202 and the information distributing server 203 are connected each other through a network which is not shown in the drawing.

The user's terminal 202 includes an anonymized feedback information generating unit 210, an information recommendation rule DB 252, a behavior information DB 260, an anonymized feedback information sending unit 271, an information recommendation rule receiving unit 272, a recommendation information receiving unit 273, an information recommendation unit 276, a user interface 277 and a behavior information collecting unit 278.

The anonymized feedback information generating unit 210 generates feedback information by use of behavior information which the information recommendation rule DB 260 stores, and an information recommendation rule which the information recommendation rule DB 252 stores. Moreover, the anonymized feedback information generating unit 210 generates anonymized feedback information by anonymizing the generated feedback information, and outputs the anonymized feedback information.

The information recommendation rule DB 252 stores a recommendation information rule which is shown, for example, in Fig. 3 and which is received from the information recommendation rule receiving unit 272.

The behavior information DB 260 stores the behavior information which is received from the behavior information collecting unit 278 and which is shown, for example, in Fig. 2.

The anonymized feedback information sending unit 271 sends the anonymized feedback information, which the anonymized feedback information generating unit 210 generates and which is shown, for example, in Fig. 6, to the information distributing server 203.

The information recommendation rule receiving unit 272 receives the information recommendation rule from the information distributing server 203, and makes the information recommendation rule recorded in the information recommendation rule DB 252.

The recommendation information receiving unit 273 receives recommendation information from the information distributing server 203 and outputs the recommendation information to the information recommendation unit 276.

The information recommendation unit 276 determines a unit of the recommendation information, which is presented to a user, out of the units of the recommendation information which are received from the recommendation information receiving unit 273 by use of the information recommendation rule which the information recommendation rule DB 252 stores, and the behavior information which the behavior information DB 260 stores. Then, the information recommending unit 276 outputs the determined recommendation information to the user interface 277.

For example, the information recommendation unit 276 receives four units of recommendation information which recommend 'commodity A', 'commodity B', 'commodity C' and 'commodity D' respectively from the recommendation information receiving unit 273.

Next, the information recommendation unit 276 determines the recommendation information, which is outputted to the user interface 277, with reference to the information recommendation rule which the information recommendation rule DB 252 stores. For example, it is assumed that the information recommendation rule DB 252 stores the information recommendation rule shown in Fig. 8. Moreover, it is assumed that the behavior information DB 260 stores the behavior information shown in Fig. 2.

In this case, on the basis of the behavior information of 'refer to commodity A', the information recommending unit 276 extract number of co-occurrences with each of other commodities which have the relation with 'commodity A' and which are corresponding to a row of 'commodity A' of Fig. 8.. Similarly, the information recommending unit 276 extracts number of co-occurrences with each of other commodities which are corresponding to a row of 'commodity B' and a row of 'commodity D'.

Next, the information recommendation unit 276 adds the number of co-occurrences per the commodity. Then, the information recommending unit 276 calculates levels of interest, which the user has in 'commodity A', 'commodity B', 'commodity C' and 'commodity D', are '1', '7', '12' and '6' respectively.

Next, the information recommendation unit 276 excludes 'commodity A', 'commodity B' and 'commodity D' which the user has referred to already, and selects information which recommends 'commodity C', and outputs the information to the user interface 277. For example, the information recommendation unit 276 selects all of the commodities other than the commodities, whose level of interest is 0, out of the commodities other than the commodities which have been referred to already. Here, the information recommendation unit 276 may select the commodity, whose level of interest is the highest, out of the commodities other than the commodities which have been referred to already. Moreover, the information recommendation unit 276 may select the commodity, whose level of interest is equal to or larger than a predetermined value, out of the commodities other than the commodities which have been referred to already. Moreover, the information recommendation unit 276 may select the commodities, whose number is predetermined and which are selected in a highness order of the level of interest, out of the commodities other than the commodities which have been referred to already.

The user interface 277 outputs the recommendation information, which is received from the information recommendation unit 276, to an output means (for example, an output unit 705 shown in Fig. 9) of the user's terminal 202 to the behavior information collecting unit 278.

Moreover, the user interface 277 outputs the user's behavior information, which is acquired from an input means (for example, an input unit 704 shown in Fig. 9) of the user's terminal 202.

The behavior information collecting unit 278 makes the behavior information DB 260 record the user's behavior information which is received from the user interface 277 and a GPS (Global Positioning System) receiver (not shown in the drawing) of the user's terminal 202.

The information distributing server 203 includes an information recommendation rule updating unit 240, an information recommendation rule DB 253, an anonymized feedback information receiving unit 281, an information recommendation rule providing unit 282, a recommendation information sending unit 283 and a recommendation information DB 285.

The information recommendation rule updating unit 240 updates the information recommendation rule, which the information recommendation rule DB 253 stores, by use of the anonymized feedback information which is received from the anonymized feedback information receiving unit 281.

The information recommendation rule DB 253 stores the information recommendation rule.

The anonymized feedback information receiving unit 281 receives the anonymized feedback information from the user's terminal 202, and outputs the anonymized feedback information to the information recommendation rule updating unit 240.

The information recommendation rule providing unit 282 reads the information recommendation rule which the information recommendation rule DB 253 stores, and sends the information recommendation rule to the user's terminal 202. For example, in the case that the information recommendation rule updating unit 240 updates the information recommendation rule DB 253, the information recommendation rule providing unit 282 reads the information recommendation rule, and sends the information recommendation rule to the user's terminal 202. Here, in the case that the user's terminal 202 requests the information recommendation rule providing unit 282 to send the information recommendation rule, the information recommendation rule providing unit 282 may read the information recommendation rule, and send the information recommendation rule to the user's terminal 202.

The recommendation information sending unit 283 reads the recommendation information which the recommendation information DB stores, and sends the recommendation information to the user's terminal.

The recommendation information DB 285 stores the recommendation information.

Next, an operation of the present exemplary embodiment will be explained in detail with reference to Fig. 12 to Fig. 14.

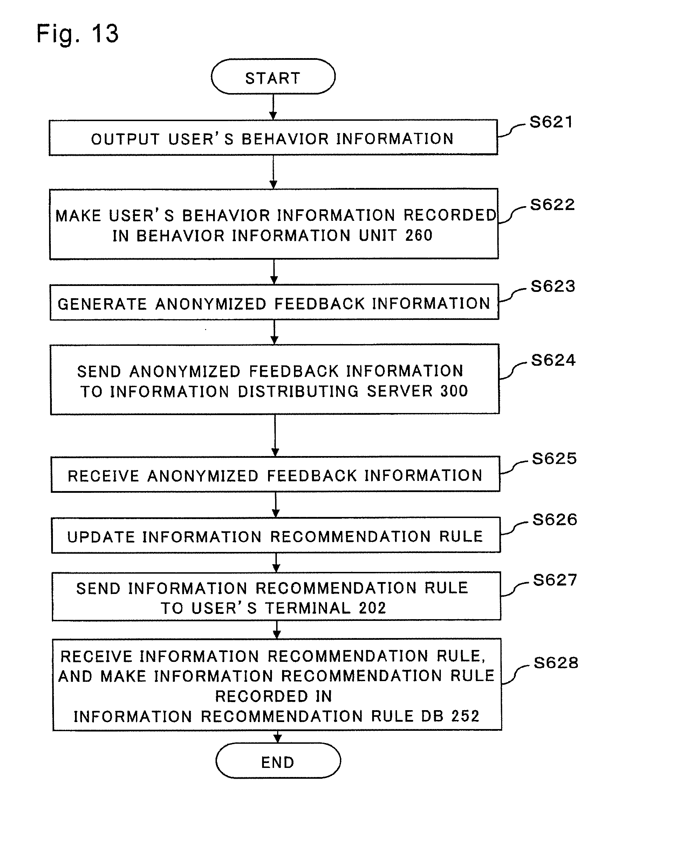

Fig. 13 is a flowchart showing an operation that the information recommendation system updates the information recommendation rule.

The user interface 277 of the user's terminal 202 outputs the user's behavior information to the behavior information collecting unit 278 (S621).

Next, the behavior information collecting unit 278 makes the behavior information DB 260 store the received behavior information (S622).

Next, the anonymized feedback information generating unit 210 generates the anonymized feedback information by use of the information recommendation rule which the information recommendation rule DB 252 stores, and the behavior information which the behavior information DB 260 stores, and outputs the anonymized feedback information (S623).

Next, the anonymized feedback information sending unit 271 sends the anonymized feedback information, which the anonymized feedback information generating unit 210 generates, to the information distributing server 203 (S624).

The anonymized feedback information receiving unit 281 of the information distributing server 203 receives the anonymized feedback information, and outputs the anonymized feedback information to the information recommendation rule updating unit 240 (S625).

Next, the information recommendation rule updating unit 240 updates the information recommendation rule, which the information recommendation rule DB 253 stores, on the basis of the anonymized feedback information which is received(S626).

Here, the information recommendation rule updating unit 240 may activate S626 at a time when receiving the anonymized feedback information from each of other user's terminals 202 which are not shown in the drawing. Moreover, the information recommendation rule updating unit 240 may activate S626 at a time when receiving units of the anonymized feedback information whose number is any integer which is one or more. Or, the information recommendation rule updating unit 240 may carry out S626 at a predetermined time or at a predetermined time interval.

Next, the information recommendation rule providing unit 282 sends the information recommendation rule, which the information recommendation rule DB 253 stores, to the user's terminal 202.

Next, the information recommendation rule receiving unit 272 of the user's terminal 202 receives the information recommendation rule, and makes the information recommendation rule recorded in the information recommendation rule DB 252 (S628).

The above is explanation on the operation that the information recommendation system 200 updates the information recommendation rule.

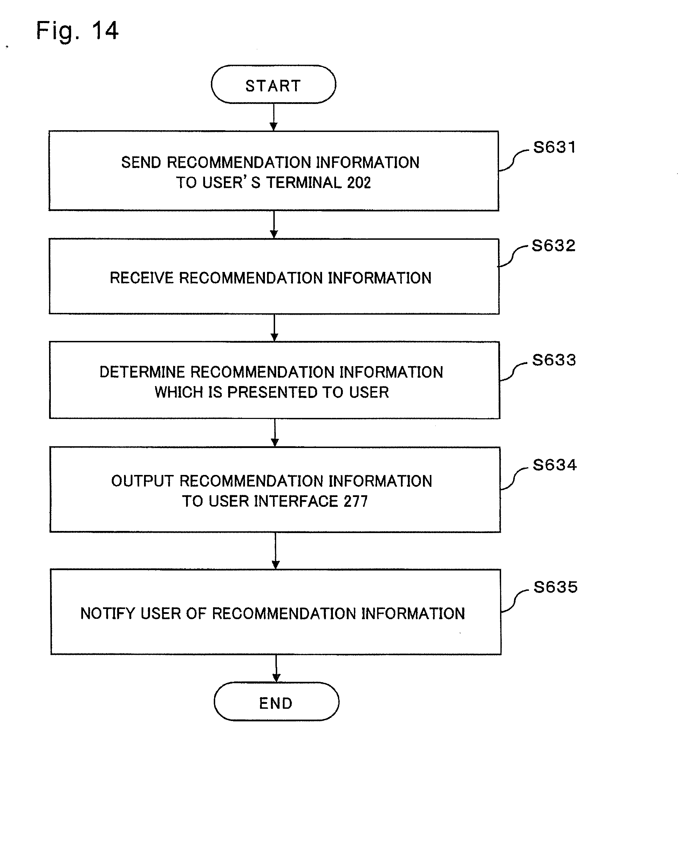

Fig. 14 is a flowchart showing an operation that information recommendation system 200 presents the recommendation information to the user.

The recommendation information sending unit 283 of the information distributing server 203 sends the recommendation information, which is read from the recommendation information DB 285, to the user's terminal 202 (S631). For example, the recommendation information sending unit 283 may carry out S631 at a predetermined time or at a predetermined time interval.

Next, the recommendation information receiving unit 273 of the user's terminal 202 receives the recommendation information, and outputs the recommendation information to the information recommendation unit 276 (S632).

Next, the information recommendation unit 276 determines a unit of the recommendation information, which is presented to the user, out of the units of the recommendation information, which are received from the recommendation information receiving unit 273, by use of the information recommendation rule which the information recommendation rule DB 252 stores, and the behavior information which the behavior information DB 260 stores (S633).

Next, the information recommendation unit 276 outputs the determined unit of the recommendation information to the user interface 277 (S634).

Next, the user interface 277 informs the user of the received recommendation information (S635). For example, the user interface 277 informs the user of the recommendation information through the output unit 705 shown in Fig. 9. Here, the user interface 277 may inform the user of the recommendation information by use of any means.

The above is explanation on the operation that the information recommendation system 200 presents the recommendation information to the user.

In addition to the effect of the first exemplary embodiment, the present exemplary embodiment mentioned above has an effect in a point that it is possible to recommend the information on the basis of the optimum information recommendation rule.

The reason is that the present exemplary embodiment has the following configuration. That is, the present exemplary embodiment has the first configuration that the information recommendation rule providing unit 282 sends the information recommendation rule which is stored in the information recommendation rule DB 253, and the information recommendation rule receiving unit 272 makes the information recommendation rule recorded in the information recommendation rule DB 252. Moreover, the present exemplary embodiment has the second configuration that the information recommendation unit 276 selects the information, which is presented to the user, on the basis of the information recommendation rule which is stored in the information recommendation rule DB 252.

### <<<Third exemplary embodiment>>>

Next, a third exemplary embodiment of the present invention will be explained in detail with reference to a drawing. Hereinafter, explanation which overlaps with the above-mentioned explanation is omitted as far as explanation on the present exemplary embodiment does not become obscure.

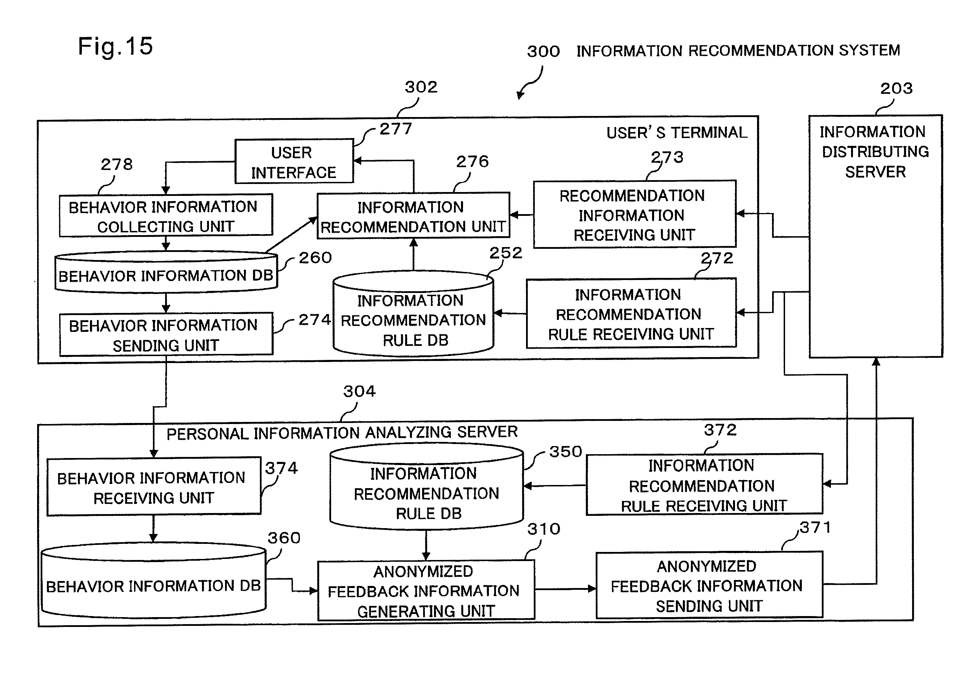

Fig. 15 is a block diagram showing a configuration of an information recommendation system 300 according to the third exemplary embodiment of the present invention.

With reference to Fig. 15, the information recommendation system 300 according to the present exemplary embodiment includes a plurality of user's terminal 302 (only one terminal is shown in the drawing as a typical example.), the information distributing server 203 and a personal information analyzing server 304. The user's terminal 302, the information distributing server 203 and the personal information analyzing server 304 are connected each other through a network which is not shown in the drawing.

The personal information analyzing server 304 is a server whose security is authenticated and which is operated by a third party's organ. Accordingly, it is assumed that privacy information which the personal information analyzing server 304 holds is not leaked.

The user's terminal 302 includes the information recommendation rule DB 252, the behavior information DB 260, the information recommendation rule receiving unit 272, the recommendation information receiving unit 273, a behavior information sending unit 274, the information recommendation unit 276, the user interface 277 and the behavior information collecting unit 278.

The behavior information sending unit 274 sends the behavior information, which is read from the behavior information DB 260, to the personal information analyzing server 304.

The personal information analyzing server 304 includes an anonymized feedback information generating unit 310, an information recommendation rule DB 350, a behavior information DB 360, an anonymized feedback information sending unit 371, an information recommendation rule receiving unit 372 and a behavior information receiving unit 374.

The anonymized feedback information generating unit 310 generates feedback information by use of behavior information which the behavior information DB 360 stores, and an information recommendation rule which the information recommendation rule DB 350 stores. Moreover, the anonymized feedback information generating unit 310 generates anonymized feedback information by anonymizing the generated feedback information, and outputs the anonymized feedback information.

The information recommendation rule DB 350 stores the recommendation information rule which is received from the information recommendation rule receiving unit 372 and which is shown in Fig. 3.

The behavior information DB 360 stores the behavior information which is received from the behavior information receiving unit 374 and which is shown, for example, in Fig. 2.

The anonymized feedback information sending unit 371 sends the anonymized feedback information, which the anonymized feedback information generating unit 310 generates, to the information distributing server 203.

The information recommendation rule receiving unit 372 receives the information recommendation rule from the information distributing server 203, and makes the information recommendation rule recorded in the behavior information DB 360.

The behavior information receiving unit 374 makes the received user's behavior information recorded in the behavior information DB 360.

In addition to the effect of the second exemplary embodiment, the present exemplary embodiment has an effect in a point that it is possible to reduce a load of the user's terminal 302.

The reason is that the user's terminal 302 does not include the anonymized feedback information generating unit 210, and instead the personal information analyzing server 304 includes the anonymized feedback information generating unit 310.

### <<<Fourth exemplary embodiment>>>

Next, a fourth exemplary embodiment of the present invention will be explained in detail with reference to a drawing. Hereinafter, explanation which overlaps with the above-mentioned explanation is omitted as far as explanation on the present exemplary embodiment does not become obscure.

Fig. 16 is a block diagram showing a configuration of a personal information analyzing system 400 according to the fourth exemplary embodiment of the present invention.

With reference to Fig. 16, the personal information analyzing system 400 according to the present exemplary embodiment includes a plurality of anonymized feedback information generating units 410 (only one unit is shown in the drawing as a typical example), an information recommendation rule updating unit 440 and the information recommendation rule DB 150.

Next, each component of the personal information analyzing system 400 in the fourth exemplary embodiment will be explained. Here, the component shown in Fig. 16 may be a component which is divided in an unit of hardware, or may be a component which is divided in an unit of function of a computer. In this case, the component shown in Fig. 16 is the component which is divided in the unit of function of the computer.

### === Anonymized feedback information generating units 410 ===

The anonymized feedback information generating unit 410 generates feedback information by use of personal information (for example, evaluation value) and the information recommendation rule which the information recommendation rule DB 150.

For example, the information recommendation rule is information (for example, a mean value of evaluation values which a plurality of users determine when evaluating a commodity, and number of users who evaluate the commodity) indicating evaluation on an element which recommendation information recommends.

For example, the anonymized feedback information generating unit 410 generates the feedback information by analyzing the personal information with reference to the information recommendation rule.

Moreover, the anonymized feedback information generating unit 410 generates anonymized feedback information by anonymizing the generated feedback information. Next, the anonymized feedback information generating unit 410 outputs the anonymized feedback information.

### === Evaluation value ===

Fig. 17 is a diagram showing an example of the evaluation value which is an example of the personal information. For example, the evaluation value shown in Fig. 17 indicates that, as the value becomes large, user's evaluation on the commodity becomes better. Here, an evaluation value 'X', which is assigned to a commodity C in Fig. 17, indicates that evaluation has not been carried out yet (no evaluation value). The evaluation value is inputted, for example, by a user's handling an input means (for example, the input unit 704 shown in Fig. 9) of a user's terminal (not shown in the drawing) which includes the personal information analyzing system 400. Moreover, an evaluation value generating means (not shown in the drawing) of the personal information analyzing system 400 may generate the evaluation value on the basis of the behavior information shown in Fig. 2. While the evaluation value is an integer according to the above-mentioned example, it is not necessary that the evaluation value is an integer.

Moreover, the evaluation value may be information which indicates a positive evaluation (good evaluation) in the case that the evaluation value is positive, and a negative evaluation (bad evaluation) in the case that the evaluation value is negative. In this case, the personal information analyzing system 400 may process the positive evaluation and the negative evaluation separately.

### === Recommendation Information rule ===

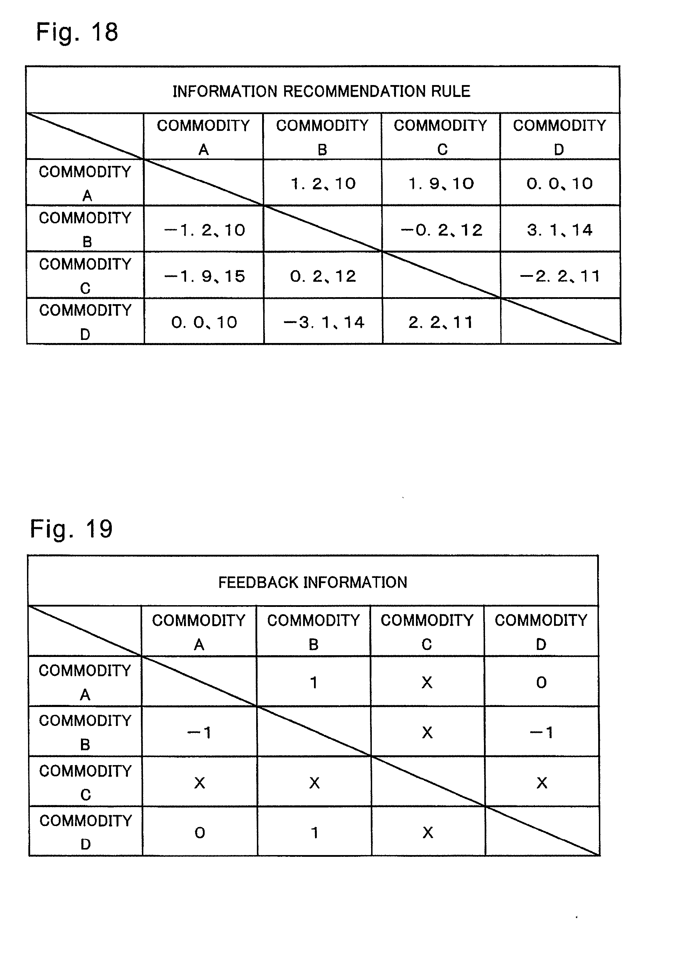

Fig. 18 is a diagram showing an example of the recommendation information rule. As shown in Fig. 18, the recommendation information rule is, for example, a mean value of difference between an evaluation value of one commodity and an evaluation value of another commodity, and number of the differences between the evaluation values (number of users each of whom provides the difference between the evaluation values. In Fig. 18, for example, a relation between 'commodity A' and 'commodity C' is '1.9, 10' This means that a mean value of difference between the evaluation value of 'commodity A' and the evaluation value of 'commodity C' is '1.9', and number of users who evaluate both commodities is '10'.

In this case, the recommendation information rule indicates that, as the mean value of the difference between the evaluation values becomes large, a level of suitability on presenting the recommendation information on the commodity, which is corresponding to the mean value, becomes large.

### === Feedback information ===

Fig. 19 is a diagram showing an example of the feedback information which the anonymized feedback information generating unit 410 generates by analyzing the evaluation value shown in Fig. 17 with reference to the information recommendation rule shown in Fig. 18.

The feedback information shown in Fig. 19 is information indicating the difference between the evaluation values of the commodities which are listed in the evaluation value shown in Fig. 17 and which are set as an object in the information recommendation rule shown in Fig. 18. Here, a mark 'X' in Fig. 19 indicates that the difference between the evaluation values is invalid (there is no valid difference between the evaluation values.) (hereinafter, 'X' will indicate similar meaning.). That is, the feedback information shown in Fig. 19 is information which is used for updating the information recommendation rule shown in Fig. 18 by reflecting the differences among the evaluation values of 'commodity A', 'commodity B', 'commodity C' and 'commodity D' which are listed in the evaluation value shown in Fig. 17. Here, since 'commodity E', which is listed in the evaluation value shown in Fig. 17, has no element corresponding to the information recommendation rule shown in Fig. 18, 'commodity E' is not reflected in the feedback information shown in Fig. 19.

### === Anonymized feedback information ===

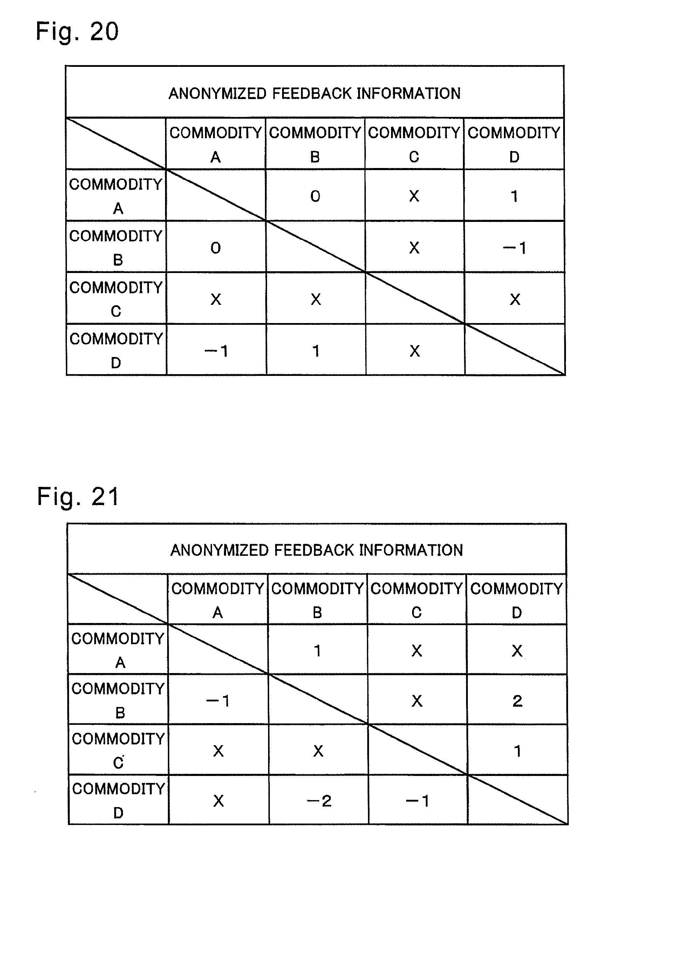

Fig. 20 is a diagram showing an example of the anonymized feedback information which is generated by the anonymized feedback information generating unit 410 anonymizing the feedback information shown in Fig. 19.

The anonymized feedback information is information which is anonymized by applying random numbers, whose expectation value is 0, to values of the feedback information shown in Fig. 19. According to the example of the anonymized feedback information shown in Fig. 20, a difference of an evaluation value of 'commodity B' from an evaluation value of 'commodity A' (subtracting the evaluation value of 'commodity A' from the evaluation value of 'commodity B') changes from '1' to '0', and a difference of the evaluation value of 'commodity A' from the evaluation value of 'commodity B' changes from '-1' to '0'. Moreover, a difference of an evaluation value of 'commodity D' from the evaluation value of 'commodity A' changes from '0' to '1', and a difference of the evaluation value of 'commodity A' from the evaluation value of 'commodity D' changes from '0' to '-1'

Fig. 21 is a diagram showing an example of the anonymized feedback information corresponding to a certain user who is different from the user corresponding to the anonymized feedback information shown in Fig. 20.

### === Information recommendation rule updating unit 440 ===

The information recommendation rule updating unit 440 updates the information recommendation rule, which the information recommendation rule DB 150 stores, by use of the anonymized feedback information. For example, the information recommendation rule updating unit 440 updates the information recommendation rule by combining the information recommendation rule with the anonymized feedback information.

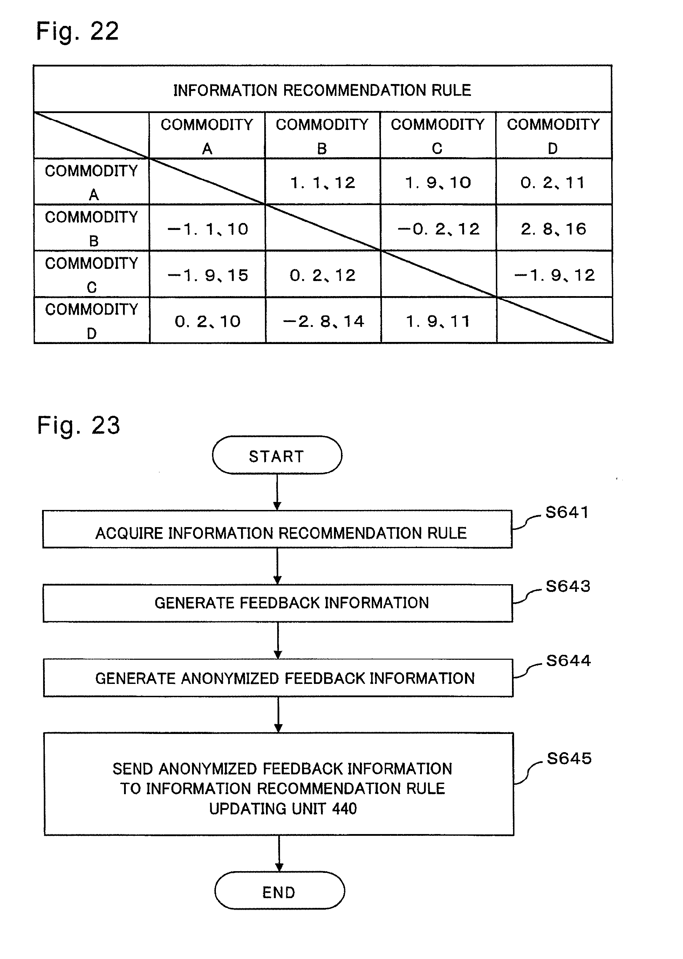

Fig. 22 is a diagram showing an information recommendation rule which is updated by combining the information recommendation rule shown in Fig. 18 with the anonymized feedback information shown in Fig. 20 and Fig. 21. As shown in Fig. 22, the difference between the evaluation values of any two commodities out of 'commodity A', 'commodity B', 'commodity C' and 'commodity D', which are listed in the anonymized feedback information shown in Fig. 20 and Fig. 21, is reflected in the information recommendation rule shown in Fig. 18. For example, a mean value of the difference of the evaluation value of 'commodity B' from the evaluation value of 'commodity A' is updated from '1.2' shown in Fig. 18 to '1.1 (= (1.2 * 10 + 0 + 1) / 12) shown in Fig. 22. Here, "*" is multiplication symbol. Furthermore, number of the users each of whom provides the difference between the evaluation values is updated from '10' to '12'.

### === Information recommendation rule DB 150 ===

The information recommendation rule DB 150 stores the recommendation information rule.

The above is explanation on each component, which is divided in the unit of function, in the personal information analyzing system 400.

Here, each component which is divided in the unit of hardware is similar to the hardware configuration of the personal information analyzing system 400 shown in Fig. 9.

The anonymized feedback information generating unit 410 and the information recommendation rule updating unit 440 may be processed by the computers 700 which are different each other.

Next, an operation of the present exemplary embodiment will be explained with reference to Fig. 16 to Fig. 23.

Fig. 23 is a flowchart showing an operation of the anonymized feedback information generating unit 410 of the present exemplary embodiment. Here, processes according to the flowchart may be carried out on the basis of program control which is carried out by the above-mentioned CPU.

The anonymized feedback information generating unit 410 acquires the information recommendation rule from the information recommendation rule DB 150 (S641).

Next, the anonymized feedback information generating unit 410 generates the feedback information by analyzing the evaluation value with reference to the information recommendation rule (S643).

Next, the anonymized feedback information generating unit 410 generates the anonymized feedback information by anonymizing the generated feedback information (S644).

Next, the anonymized feedback information generating unit 410 sends the anonymized feedback information, which is generated, to the information recommendation rule updating unit 440 (S645). For example, in the case that the information recommendation rule updating 440 requests the anonymized feedback information generating unit 410 to send the anonymized feedback information, in response to the request, the anonymized feedback information generating unit 410 sends the anonymized feedback information. Here, the anonymized feedback information generating unit 410 may send the anonymized feedback information at a predetermined time or at a predetermined time interval.

Since an operation of the information recommendation rule updating unit 440 is the same substantially as the operation of the information recommendation rule updating unit 140 shown in Fig. 11, explanation on the operation of the information recommendation rule updating unit 440 is omitted.

Similarly to the first exemplary embodiment, the present exemplary embodiment mentioned above has an effect in a point that, in the case that a user's terminal sends personal information to a server, it is possible to secure anonymity of the personal information from the terminal side.

The reason is that the anonymized feedback information generating unit 410 generates the anonymized feedback information, and the information recommendation rule updating unit 440 updates the information recommendation rule on the basis of the anonymized feedback information.

### <<<Fifth exemplary embodiment>>>

Next, a fifth exemplary embodiment of the present invention will be explained in detail with reference to a drawing. Hereinafter, explanation which overlaps with the above-mentioned explanation is omitted as far as explanation on the present exemplary embodiment does not become obscure.

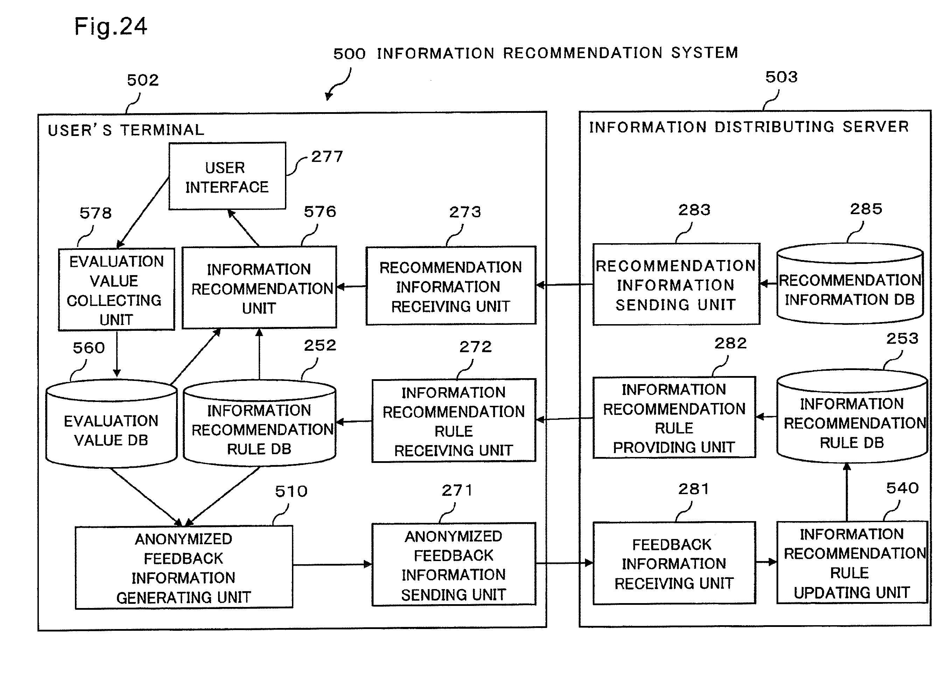

Fig. 24 is a block diagram showing a configuration of an information recommendation system 500 according to the fifth exemplary embodiment of the present invention.

With reference to Fig. 24, the information recommendation system 500 in the present exemplary embodiment includes a plurality of user's terminals 502 (only one terminal is shown in the drawing as a typical example.), and an information distributing server 503. The user's terminal 502 and the information distributing server 503 are connected each other through a network which is not shown in the drawing.

The user's terminal 502 includes an anonymized feedback information generating unit 510, the information recommendation rule DB 252, an evaluation value DB 560, the anonymized feedback information sending unit 271, the information recommendation rule receiving unit 272, the recommendation information receiving unit 273, an information recommendation unit 576, the user interface 277 and an evaluation value collecting unit 578.

The anonymized feedback information generating unit 510 generates feedback information by use of an evaluation value which the evaluation value DB 560 stores and the information recommendation rule which the information recommendation rule DB 252 stores. Moreover, the anonymized feedback information generating unit 510 generates anonymized feedback information by anonymizing the generated feedback information, and outputs the anonymized feedback information.

The information recommendation rule DB 252 stores the recommendation information rule which is received from the information recommendation rule receiving unit 272 and which is shown, for example, in Fig. 18.

The evaluation value DB 560 stores the evaluation value which is received from the evaluation value collecting unit 578 and which is shown, for example, in Fig. 17.

The anonymized feedback information sending unit 271 sends the anonymized feedback information, which the anonymized feedback information generating unit 510 generates and which is shown, for example, in Fig.20, to the information distributing server 503.

The information recommendation rule receiving unit 272 receives the information recommendation rule from the information distributing server 503, and makes the information recommendation rule recorded in the information recommendation rule DB 252.

The recommendation information receiving unit 273 receives recommendation information from the information distributing server 503, and outputs the recommendation information to the information recommendation unit 576.

The information recommendation unit 576 determines a unit of the recommendation information, which is presented to a user, out of units of the recommendation information, which are received from the recommendation information receiving unit 273, by use of the information recommendation rule which the information recommendation rule DB 252 stores, and the evaluation value which the evaluation value DB 560 stores. Moreover, the information recommendation unit 576 outputs the determined recommendation information to the user interface 277.

For example, the information recommendation unit 576 receives units of information, which recommend 'commodity A', 'commodity B', 'commodity C' and 'commodity D' respectively, from the recommendation information receiving unit 273.

Next, the information recommendation unit 576 determines the recommendation information, which is outputted to the user interface 277, with reference to the information recommendation rule which the information recommendation rule DB 252 stores. For example, it is assumed that the information recommendation rule DB 252 stores the information recommendation rule shown in Fig. 22. Moreover, it is assumed that the evaluation value DB 560 stores the evaluation value shown in Fig. 17.

In this case, the information recommendation unit 576 adds '4', which is an evaluation value of 'commodity A' stored in the evaluation value DB 560, to '1.9' which is a mean value of a difference of an evaluation value of 'commodity C' from the evaluation value of 'commodity A' to acquire '5.9' as a result of the addition. Similarly, the information recommendation unit 576 adds '5', which is an evaluation value of 'commodity B' stored in the evaluation value DB 560, to '-0.2' which is a mean value of a difference of the evaluation value of 'commodity C' from the evaluation value of 'commodity B' to acquire '4.8' as a result of the addition. Moreover, the information recommendation unit 576 adds '4', which is an evaluation value of 'commodity D' stored in the evaluation value DB 560, to '1.9' which is a mean value of a difference of the evaluation value of'commodity C' from the evaluation value of'commodity D' to acquire '5.9' as a result of the addition.

Next, the information recommendation unit 576 calculates a weighted mean value of the addition result (hereinafter, the weighted mean value is called evaluation value for recommendation) by use of number of the users each of whom provides the difference of the evaluation value shown in Fig. 22. For example, the information recommendation unit 576 calculates the evaluation value for recommendation related to 'commodity C' to acquire a calculation result of '(15 * 5.9 +12 * 4.8 + 11 * 5.9) / (15+ 12 + 11) = 5.6 (round off to the first decimal place)'. In this way, the information recommendation unit 576 calculates the evaluation value for recommendation related to 'commodity C' whose evaluation has not been carried out (evaluation value is denoted as 'X'.) in the evaluation value shown in Fig. 17.

Next, the information recommendation unit 576 selects information, which recommends a commodity, on the basis of the calculated evaluation value for recommendation, and outputs the selected information to the user interface 277. For example, the information recommendation unit 576 selects information recommending a commodity which is corresponding to 'the largest evaluation value for recommendation'. Moreover, the information recommendation unit 576 may select each unit of information which recommends a commodity whose evaluation value for recommendation is equal to or larger than a predetermined value. Moreover, the information recommendation unit 576 may select information, which 'recommends commodities whose number is predetermined, in an order of largeness of the evaluation value for recommendation.

Here, the information recommendation unit 576 may calculate also the evaluation value for recommendation related to the commodity which is listed in the evaluation value shown in Fig. 17 and whose evaluation has been carried out already (have a numerical value as the evaluation value).

The user interface 277 outputs the recommendation information, which is received from the information recommendation unit 576, to an output means (for example, the output unit 705 shown in Fig. 9) of the user's terminal 502.

Moreover, the user interface 277 outputs the evaluation value, which is acquired from an input means (for example, the input unit 704 shown in Fig. 9) of the user's terminal 502 and which is determined by the user, to the evaluation value collecting unit 578.

The evaluation value collecting unit 578 makes the evaluation value DB 560 record the evaluation value which is received from the user interface 277 and a means (for example, a means of the user's terminal 502 for calculating the evaluation value on the basis of behavior information) not shown in the drawing and which is determined by the user.

The information distributing server 503 includes an information recommendation rule updating unit 540, the information recommendation rule DB 253, the anonymized feedback information receiving unit 281, the information recommendation rule providing unit 282, the recommendation information sending unit 283 and the recommendation information DB 285.

The information recommendation rule updating unit 540 updates the information recommendation rule, which the information recommendation rule DB 253 stores, by use of the anonymized feedback information which is received from the anonymized feedback information receiving unit 281.

The information recommendation rule DB 253 stores the information recommendation rule.

The anonymized feedback information receiving unit 281 receives the anonymized feedback information from the user's terminal 502, and outputs the anonymized feedback information to the information recommendation rule updating unit 540.

The information recommendation rule providing unit 282 reads the information recommendation rule which the information recommendation rule DB 253 stores, and sends the information recommendation rule to the user's terminal 502. For example, in the case that the information recommendation rule updating unit 540 updates the information recommendation rule DB 253, the information recommendation rule providing unit 282 reads the updated information recommendation rule and outputs the updated information recommendation rule to the user's terminal 502. Here, in the case that the user's terminal 502 requests the information recommendation rule providing unit 282 to send the information recommendation rule, the information recommendation rule providing unit 282 may read the information recommendation rule and output the information recommendation rule to the user's terminal 502.

The recommendation information sending unit 283 reads the recommendation information which the recommendation information DB stores, and sends the read recommendation information to the user's terminal 502.

The recommendation information DB 285 stores the recommendation information.

Since an operation that the information recommendation system 500 of the present exemplary embodiment updates the information recommendation rule is the same substantially as the operation shown in Fig. 13, explanation on the operation that the information recommendation system 500 updates the information recommendation rule is omitted. Moreover, since an operation that the information recommendation system 500 of the present exemplary embodiment presents the recommendation information to the user is the same substantially as the operation shown in Fig. 14, explanation on the operation that the information recommendation system 500 presents the recommendation information to the user is omitted.

In addition to the effect of the fourth exemplary embodiment, the present exemplary embodiment has an effect in a point that it is possible to recommend the information on the basis of the optimum information recommendation rule.

The reason is that the present exemplary embodiment has the following configuration. That is, the present exemplary embodiment has the first configuration that the information recommendation rule providing unit 282 sends the information recommendation rule which is stored in the information recommendation rule DB 253, and the information recommendation rule receiving unit 272 makes the information recommendation rule recorded in the information recommendation rule DB 252. The present exemplary embodiment has the second configuration that the information recommendation unit 576 selects the information, which is presented to the user, on the basis of the information recommendation rule which is stored in the information recommendation rule DB 252.

### <<<Sixth exemplary embodiment>>>

Next, a sixth exemplary embodiment of the present invention will be explained in detail with reference to a drawing. Hereinafter, explanation which overlaps with the above-mentioned explanation is omitted as far as explanation on the present exemplary embodiment does not become obscure.

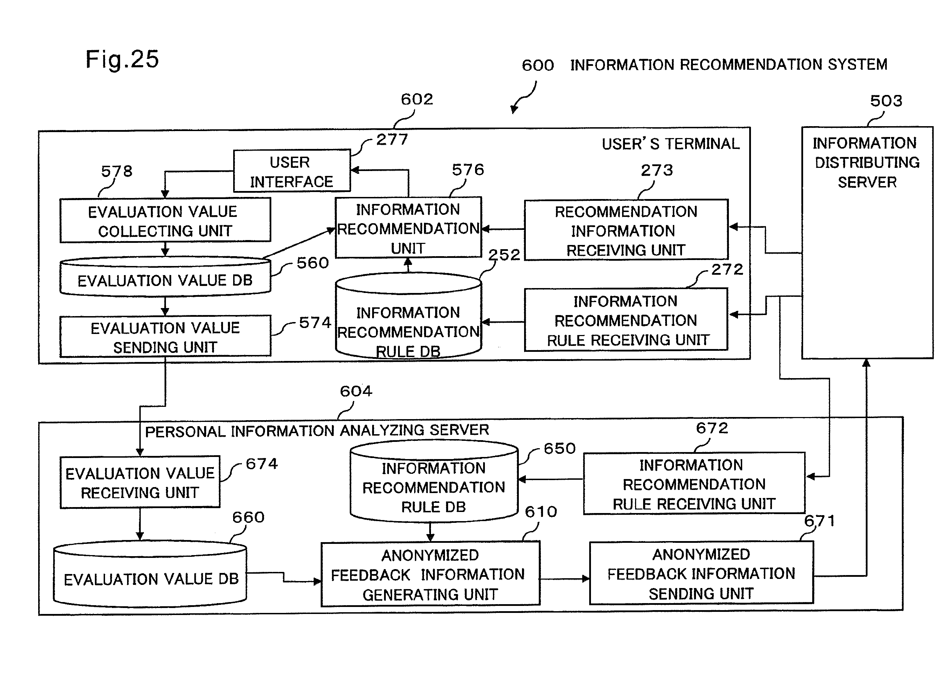

Fig. 25 is a block diagram showing a configuration of an information recommendation system 600 according to the sixth exemplary embodiment of the present invention.

With reference to Fig. 25, the information recommendation system 600 according to the present exemplary embodiment includes a plurality of user's terminals 602 (only one terminal is shown in the drawing as a typical example), the information distributing server 503 and a personal information analyzing server 604. The user's terminal 602, the information distributing server 503 and the personal information analyzing server 604 are connected each other through a network which is not shown in the drawing.

The personal information analyzing server 604 is, for example, a server whose security is authenticated and which is operated by a third party organ. Here, it is assumed that privacy information which the personal information analyzing server 604 holds is not leaked.

The user's terminals 602 includes the information recommendation rule DB 252, the evaluation value DB 560, the information recommendation rule receiving unit 272, the recommendation information receiving unit 273, an evaluation value sending unit 574, the information recommendation unit 576, the user interface 277 and the evaluation value collecting unit 578.

The evaluation value sending unit 574 sends the evaluation value, which is read from the evaluation value DB 560, to the personal information analyzing server 604.

The personal information analyzing server 604 includes an anonymized feedback information generating unit 610, an information recommendation rule DB 650, an evaluation value DB 660, an anonymized feedback information sending unit 671, an information recommendation rule receiving unit 672 and an evaluation value receiving unit 674.

The anonymized feedback information generating unit 610 generates feedback information by use of an evaluation value which the evaluation value DB 660 stores, and an information recommendation rule which the information recommendation rule DB 650 stores. Moreover, the anonymized feedback information generating unit 610 generates anonymized feedback information by anonymizing the generated feedback information, and outputs the anonymized feedback information.

The information recommendation rule DB 650 stores the information recommendation rule which is received from the information recommendation rule receiving unit 672 and which is shown, for example, in Fig. 18.

The evaluation value DB 660 stores the evaluation value which is received from the evaluation value receiving unit 674 and which is shown, for example, in Fig. 17.

The anonymized feedback information sending unit 671 sends the anonymized feedback information, which the anonymized feedback information generating unit 610 generates, to the information distributing server 503.

The information recommendation rule receiving unit 672 receives the information recommendation rule from the information distributing server 503, and makes the information recommendation rule recorded in the information recommendation rule DB 650.

The evaluation value receiving unit 674 makes the evaluation value DB 660 record the received evaluation value which the user determines.

In addition to the effect of the fifth exemplary embodiment, the present exemplary embodiment mentioned above has an effect in a point that it is possible to reduce a load of the user's terminal 602.

The reason is that the user's terminal 602 does not include the anonymized feedback information generating unit 510, and instead the personal information analyzing server 604 includes the anonymized feedback information generating unit 610.

Each of the user's terminal 202, the information distributing server 203, the user's terminal 302, the personal information analyzing server 304, the user's terminal 502, the information distributing server 503, the user's terminal 602 and the personal information analyzing server 604 mentioned above may be the computer 700 shown in Fig. 9.

It is not always necessary that the components, which have been explained in each exemplary embodiment, exist independently each other. For example, a plurality of the components may be realized by one module. Moreover, one component may be realized by a plurality of modules. Moreover, one component may have a configuration that the one component is a part of another component. Moreover, one component may have a configuration that a part of the one component overlaps with a part of another component.

Each component and a module which realizes each the component in the above-mentioned exemplary embodiment may be realized by hardware. Moreover, each component and a module which realizes each component may be realized by a computer and a program. Moreover, each component and a module which realizes each component may be realized by mixture of a hardware module with a computer and a program.

The program is recorded in a non-volatile computer readable record medium such as a magnetic disk, a semi-conductor memory or the like and is provided by the non-volatile computer readable record medium. Then, the program is read by a computer when activating the computer. By controlling an operation of CPU, the program makes CPU work as each the component which is described in each of the above-mentioned exemplary embodiments

Moreover, while a plurality of operations are described in turn in a form of the flowchart according to each of the exemplary embodiments mentioned above, the turn of the description does not limit a turn of carrying out a plurality of operations Therefore, it is possible to change the turn of the plural operation as far as the change does not cause a substantial trouble.

Furthermore, according to each of the exemplary embodiments mentioned above, a plurality of operations are not limited to being carried out at times different each other. For example, while one operation is being carried out, another operation may be activated, and an execution timing of one operation and an execution timing of another operation may overlap each other partially or entirely.

Furthermore, while it is described in each of the exemplary embodiments mentioned above that one operation activates another operation, the description does not limit each relationship between one operation and the other operation. Therefore, when carrying out each exemplary embodiment, each relationship between the operations can be changed as far as the change does not cause a substantial problem. The specific description on each operation of each component does not limit each operation of each component. Therefore, each specific operation of each component may be changed as far as the change does not cause a problem to characteristics of function, performance or the like.

While the present invention has been described with reference to the exemplary embodiments, the present invention is not limited to the above-mentioned exemplary embodiments. Various changes, which a person skilled in the art can understand, can be added to the composition and the details of the invention of the present application in the scope of the invention of the present application.

This application claims priority based on the Japanese Patent Application No. 2012-248526 filed on November 12, 2012 and the disclosure of which is hereby incorporated in its entirety.

### Reference signs List

- 100: personal information analyzing system
- 110: anonymized feedback information generating unit
- 140: information recommendation rule updating unit
- 150: information recommendation rule DB
- 200: information recommendation system
- 202: user's terminal
- 203: information distributing server
- 210: anonymized feedback information generating unit
- 240: information recommendation rule updating unit
- 252: information recommendation rule DB
- 253: information recommendation rule DB
- 260: behavior information DB
- 271: anonymized feedback information sending unit
- 272: information recommendation rule receiving unit
- 273: recommendation information receiving unit
- 274: behavior information sending unit
- 276: information recommendation unit
- 277: user interface
- 278: behavior information collecting unit
- 281: anonymized feedback information receiving unit
- 282: information recommendation rule providing unit
- 283: recommendation information sending unit
- 285: recommendation information DB
- 300: information recommendation system
- 302: user's terminal
- 304: personal information analyzing server
- 310: anonymized feedback information generating unit
- 350: information recommendation rule DB
- 360: behavior information DB
- 371: anonymized feedback information sending unit
- 372: information recommendation rule receiving unit
- 374: behavior information receiving unit
- 400: personal information analyzing system
- 410: anonymized feedback information generating unit
- 440: information recommendation rule updating unit
- 500: information recommendation system
- 502: user's terminal
- 503: information distributing server
- 510: anonymized feedback information generating unit
- 540: information recommendation rule updating unit
- 560: evaluation value DB
- 574: evaluation value sending unit
- 576: information recommendation unit
- 578: evaluation value collecting unit
- 600: information recommendation system
- 602: user's terminal
- 604: personal information analyzing server
- 610: anonymized feedback information generating unit
- 650: information recommendation rule DB
- 660: evaluation value DB
- 671: anonymized feedback information sending unit
- 672: information recommendation rule receiving unit
- 674: evaluation value receiving unit
- 700: computer
- 701: CPU
- 702: storage unit
- 703: storage device
- 704: input unit
- 705: output unit
- 706: communication unit
- 707: storage medium

## Claims

1. A personal information analyzing system, comprising:
an information recommendation rule storing means for storing an information recommendation rule indicating a level of recommendation priority of each unit of recommendation information presented to a user;
an anonymized feedback information generating means for generating feedback information, which is used for updating personal information of said user with respect to said information recommendation rule, by use of personal information of said user and said information recommendation rule, generating anonymized feedback information by anonymizing said feedback information, and outputting said anonymized feedback information; and
an information recommendation rule updating means for updating said information recommendation rule using said anonymized feedback information.

2. The personal information analyzing system according to claim 1, **characterized in that**:
said personal information is behavior information of said user; and
said anonymized feedback information generating means generates said feedback information by analyzing said behavior information, reflecting said analysis result in said information recommendation rule, and extracting a difference between said information recommendation rule existing before said reflection and said information recommendation rule generated by said reflection.

3. The personal information analyzing system according to claim 1 or 2, **characterized in that**:
said information recommendation rule is information indicating a relation between elements which are recommended by said recommendation information.

4. The personal information analyzing system according to claim 1, **characterized in that**:
said personal information is an evaluation value by said user; and
said anonymized feedback information generating means generates said feedback information on the basis of a difference between said evaluation values.

5. The personal information analyzing system according to claim 1 or 4, **characterized in that**:
said information recommendation rule is information indicating a mean value of evaluation values and number of evaluations which are related to elements recommended by said recommendation information.

6. The personal information analyzing system according to any one of claims 1 to 5, **characterized in that**:
said information recommendation rule updating means updates said information recommendation rule by use of plural units of said feedback information.

7. The personal information analyzing system according to any one of claims 1 to 6, **characterized in that**:
said anonymized feedback information generating means generates anonymized feedback information by adding an error to said feedback information.

8. The personal information analyzing system according to any one of claims 1 to 6, **characterized in that**:
said anonymized feedback information generating means generates anonymized feedback information by exchanging individual values which are included in said feedback information.

9. A personal information analyzing system, comprising:
a terminal including said anonymized feedback information generating means which is described in any one of claims 1 to 8; and
an information distributing server including said information recommendation rule updating means and said information recommendation rule storing means which are described in any one of claims 1 to 8.

10. A personal information analyzing system, comprising:
a personal information analyzing server including a means for acquiring personal information, which each of plural terminals holds, from said each terminal, and said anonymized feedback information generating means which are described in any one of claims 1 to 8; and
an information distributing server including said information recommendation rule updating means and said information recommendation rule storing means which are described in any one of claims 1 to 8.

11. A personal information analyzing method, **characterized in that**:
a first computer generates feedback information, which is used for updating personal information of a user with respect to an information recommendation rule, by use of said information recommendation rule indicating a level of recommendation priority of each unit of recommendation information presented to said user, and personal information of said user, and generates anonymized feedback information by anonymizing said feedback information, and outputs said anonymized feedback information; and
a second computer updates said information recommendation rule using said anonymized feedback information.

12. A personal information analyzing method, **characterized in that**:
a first computer generates feedback information, which is used for updating personal information of a user with respect to an information recommendation rule, by use of said information recommendation rule indicating a level of recommendation priority of each unit of recommendation information presented to a user, and personal information of said user, and generates anonymized feedback information by anonymizing said feedback information, and outputs said anonymized feedback information to a second computer which updates said information recommendation rule using said anonymized feedback information.

13. A computer-readable non-transitory recording medium which records a program for making a first computer execute:
a process of generating feedback information, which is used for updating personal information of a user with respect to an information recommendation rule, by use of said information recommendation rule indicating a level of recommendation priority of each unit of recommendation information presented to said user, and personal information of said user;
a process of generating anonymized feedback information by anonymizing said feedback information; and
a process of outputting said anonymized feedback information to a second computer which updates said information recommendation rule using said anonymized feedback information.

14. A computer-readable non-transitory recording medium which records a program for making a computer execute:
a process of updating an information recommendation rule by use of anonymized feedback information generated by anonymizing feedback information which is generated by use of said information recommendation rule indicating a level of recommendation priority of each unit of recommendation information presented to said user, and by use of personal information of said user, and which is used for updating personal information of said user with respect to said information recommendation rule.

15. A terminal, comprising:
a means for generating feedback information, which is used for updating personal information of a user with respect to an information recommendation rule, by use of personal information of said user and said information recommendation rule indicating a level of recommendation priority of each unit of recommendation information presented to said user, and generating anonymized feedback information by anonymizing said feedback information; and
a means for outputting said anonymized feedback information to an information recommendation rule updating means which updates said information recommendation rule using said anonymized feedback information.

16. An information distributing server, comprising:
an information recommendation rule storing means for storing an information recommendation rule indicating a level of recommendation priority of each unit of recommendation information presented to a user; and
an information recommendation rule updating means for updating said information recommendation rule by use of anonymized feedback information generated by anonymizing feedback information which is generated by use of personal information of said user and said information recommendation rule and which is used for updating personal information of said user with respect to said information recommendation rule.
